# EUROPÄISCHE PATENTANMELDUNG

(11) **EP 4 782 187 A1**
(43) Veröffentlichungstag der Anmeldung: **29.07.2026**
(21) Anmeldenummer: 25153753.6
(22) Anmeldetag: 24.01.2025
(51) Int. Cl.: B29C 65/22, B29C 65/00

(54) **SCHWEISSWERKZEUG**

(71) Anmelder: ROPEX Industrie-Elektronik GmbH, 74321 Bietigheim-Bissingen (DE)
(72) Erfinder: Dr.-Ing. Baier, Maximilian Paul, 70191 Stuttgart (DE); Uttendorfer, Jürgen, 74354 Besigheim (DE)
(74) Vertreter: Patentanwälte Magenbauer & Kollegen Partnerschaft mbB

(57) **Zusammenfassung**

Die Erfindung betrifft ein Schweißwerkzeug (1; 70) zur Verschweißung von Kunststofffolien, mit einem Trägerteil (2), das eine mechanische Schnittstelle (8) zur Ankopplung an eine Schweißeinrichtung sowie eine Trägerfläche (4) aufweist, auf der eine Heizleiste (51; 71; 91) angeordnet ist, die einen Schichtaufbau mit jeweils wenigstens einer Schicht aus der Gruppe: erste elektrische Isolationsschicht (61: 81; 101), elektrisch leitende Heizschicht (62; 82; 102), zweite elektrische Isolationsschicht (65; 85; 105), aufweist, wobei die erste elektrische Isolationsschicht (61: 81; 101) aus Aluminiumnitrid hergestellt ist.

## Beschreibung

Die Erfindung betrifft ein Schweißwerkzeug zur Verschweißung von Kunststofffolien.

Aus der EP 3 241 666 A1 ist Heizeinrichtung zum thermischen Fügen von Kunststoffmaterialien bekannt, die einen Grundkörper aufweist, der von einer Kühlausnehmung durchsetzt ist und an dem eine elektrisch isolierende Trägerfläche ausgebildet ist, auf der wenigstens ein elektrisch leitfähiger Heizleiter angeordnet ist, der an einer der Trägerfläche abgewandten Kontaktoberfläche mit einer elektrisch isolierenden Beschichtung versehen ist, wobei die Trägerfläche wenigstens einen gekrümmten oder abgewinkelten Trägerflächenabschnitt aufweist und wobei der Heizleiter den gekrümmten oder abgewinkelten Trägerflächenabschnitt zumindest bereichsweise überdeckt.

Die Aufgabe der Erfindung besteht darin, ein Schweißwerkzeug bereitzustellen, mit dem qualitativ höherwertige Schweißnähte erzeugt werden können.

Diese Aufgabe wird für ein Schweißwerkzeug der eingangs genannten Art dadurch gelöst, dass das Schweißwerkzeug ein Trägerteil umfasst, das eine mechanische Schnittstelle zur Ankopplung an eine Schweißeinrichtung sowie eine Trägerfläche aufweist, auf der eine Heizleiste angeordnet ist, die einen Schichtaufbau mit jeweils wenigstens einer Schicht aus der Gruppe: erste elektrische Isolationsschicht, elektrisch leitende Heizschicht, zweite elektrische Isolationsschicht, aufweist, wobei die Heizleiste eine erste elektrische Isolationsschicht aufweist, die aus Aluminiumnitrid hergestellt ist.

Vorzugsweise ist vorgesehen, dass die Heizleiste als separate Baugruppe ausgebildet ist, die unabhängig von dem Trägerteil hergestellt werden kann. Alternativ ist vorgesehen, dass die Heizleiste bereits während der Herstellung direkt mit der Trägerfläche des Trägerteils verbunden wird. Hierzu kann insbesondere vorgesehen werden, dass zunächst die erste oder die zweite elektrische Isolationsschicht stoffschlüssig auf die Trägerfläche aufgebracht wird, um anschließend die weiteren Schichten der Heizleiste auf das Trägerteil aufzubringen.

Hierbei weist die Heizleiste einen Schichtaufbau auf, der darauf basiert, dass die erste Isolationsschicht, die aus Aluminiumnitrid hergestellt ist, als formstabiles Plattenmaterial zur Verfügung steht und dass auf diese erste Isolationsschicht die weiteren Schichten des Schichtaufbaus, vorzugsweise mit den Verfahren der keramischen Dickschichttechnik, aufgebracht werden. Alternativ ist vorgesehen, dass zunächst die zweite Isolationsschicht auf das Trägerteil aufgebracht wird, um anschließend den weiteren Schichtaufbau für die Heizleiste mit der aus Aluminiumnitrit hergestellten ersten Isolationsschicht als Deckschicht auf diese zweite Isolationsschicht aufzubringen. Bevorzugt ist vorgesehen, dass die elektrisch leitende Heizschicht, die elektrisch leitende Anschlussschicht und eine zweite elektrische Isolationsschicht jeweils aus einer gestaltlosen keramischen Masse, insbesondere in einem Siebdruckverfahren oder in einem Dosierverfahren mit einer Dosierdüse oder in einem dem Tintenstrahldruck nachempfundenen Druckverfahren, auf die jeweils vorhergehende Schicht aufgebracht werden. Nach dem Aufbringen der jeweiligen Schicht wird ein Aushärtungsverfahren, insbesondere ein Sinterverfahren, durchgeführt, um die typischerweise pastenartige gestaltlose keramische Masse zu verfestigen und damit den Auftrag der nächsten Schicht zu ermöglichen.

Rein exemplarisch ist vorgesehen, dass die aus Aluminiumnitrid hergestellte erste elektrische Isolationsschicht eine Durchschlagfestigkeit größer 15 kV, insbesondere von 20 kV, aufweist.

Rein exemplarisch ist vorgesehen, dass die elektrisch leitende Heizschicht einen spezifischen Widerstand von 0,18 Mikro Ohm*m bis 0,54 Mikro Ohm*m (Ohmmeter) aufweist.

Die mechanische Schnittstelle, die an Trägerteil ausgebildet ist, ermöglicht eine Ankopplung des Schweißwerkzeugs an eine Schweißeinrichtung und kann beispielsweise als leistenförmiger Metallkörper aus Aluminium oder Edelstahl oder Messing hergestellt sein. Die Aufgaben des Trägerteils bestehen darin, eine Kraftübertragung zwischen der Schweißeinrichtung und der Heizleiste sowie eine Kühlung der Heizleiste im Nachgang zu der Durchführung eines Schweißvorgangs zu gewährleisten. Die mechanische Schnittstelle kann beispielsweise als ebene Koppelfläche ausgebildet sein, in die Gewindebohrungen eingebracht sind, sodass das Trägerteil mit Schrauben an der Schweißeinrichtung festgelegt werden kann.

Vorteilhafte Weiterbildungen der Erfindung sind Gegenstand der Unteransprüche.

Zweckmäßig ist es, wenn die erste elektrische Isolationsschicht eine Dicke in einem Intervall zwischen 0,5mm bis 10mm, vorzugweise in einem Intervall zwischen 1mm und 5mm, aufweist. Hiermit wird ein günstiger Kompromiss zwischen einer zur Herstellung der ersten elektrischen Isolationsschicht benötigten Materialmenge und den elektrischen Isolationseigenschaften der ersten elektrischen Isolationsschicht gewährleistet. Beispielhaft ist vorgesehen, dass die erste elektrische Isolationsschicht als Planparallelplatte ausgebildet ist, deren größte Oberfläche als Rechteck ausgebildet ist. Vorzugsweise ist vorgesehen, dass sowohl eine längere Kante dieses Rechtecks als auch eine kürzere Kante dieses Rechtecks gleich oder größer als die Dicke der ersten elektrischen Isolationsschicht gewählt sind.

Vorteilhaft ist es, wenn die erste elektrische Isolationsschicht zumindest bereichsweise von wenigstens einer elektrisch leitenden Heizschicht, vorzugsweise zumindest bereichsweise von wenigstens zwei elektrisch leitenden Heizschichten, insbesondere zumindest bereichsweise von wenigstens drei elektrisch leitenden Heizschichten, bedeckt ist, wobei die jeweilige elektrisch leitende Heizschicht aus einem elektrisch leitenden Keramikmaterial hergestellt ist. Jede der elektrisch leitenden Heizschichten weist in Abhängigkeit von dem Herstellungsverfahren für die elektrisch leitende Heizschicht eine maximale Dicke auf, wodurch sich angesichts der elektrischen Eigenschaften des Materials, aus der die elektrisch leitende Heizschicht hergestellt wird, und der Geometrie der elektrisch leitenden Heizschicht ein bestimmter elektrischer Widerstand einstellt. Um eine Anpassung dieses elektrischen Widerstands auf die Erfordernisse für das Schweißwerkzeug zu ermöglichen, kann auf eine erste elektrisch leitende Heizschicht wenigstens eine weitere elektrisch leitende Heizschicht aufgetragen werden, die die erste elektrisch leitende Heizschicht vollständig, insbesondere deckungsgleich, oder nur teilweise, überdeckt. Hierbei wird davon ausgegangen, dass die aneinandergrenzenden elektrisch leitenden Heizschichten keinen relevanten Übergangswiderstand zueinander aufweisen und praktisch als gemeinsame elektrisch leitende Heizschicht betrachtet werden können. Beispielhaft ist vorgesehen, dass die wenigstens eine elektrisch leitende Heizschicht streifenförmig auf die exemplarisch leistenförmig ausgebildete erste Isolationsschicht aufgebracht ist, wobei eine Breite der elektrisch leitenden Heizschicht kleiner als eine Breite der ersten Isolationsschicht gewählt ist.

Bei einer Weiterbildung der Erfindung ist vorgesehen, dass auf die wenigstens eine elektrisch leitende Heizschicht wenigstens eine zweite elektrische Isolationsschicht aufgebracht ist, die aus einem elektrisch isolierenden Keramikmaterial hergestellt ist. Die Aufgabe der zweiten elektrischen Isolationsschicht besteht darin, einen Stromfluss zwischen der darunterliegenden elektrisch leitenden Heizschicht und den zu verschweißenden Kunststofffolien oder einer zur Bereitstellung eines Anpressdrucks auf die zu verschweißenden Kunststofffolien vorgesehenen Gegenwerkzeugs zu verhindern. Außerdem verhindert die zweite elektrische Isolationsschicht, dass die elektrisch leitende Heizschicht im Betrieb in Kontakt mit Sauerstoff aus der Atmosphäre kommt, denn das würde diese innerhalb ziemlich kurzer Zeit zerstören.

Bevorzugt ist vorgesehen, dass auf die erste elektrische Isolationsschicht und/oder auf die zweite elektrische Isolationsschicht eine Glasbeschichtung aufgebracht ist. Die Aufgabe der Glasbeschichtung besteht insbesondere darin, Feuchtigkeit von den darunter liegenden Schichten der Heizleiste fernzuhalten. Hierzu weist die Glasbeschichtung eine sehr geschlossene Oberfläche auf, die das Eindringen von Feuchtigkeit verhindert. Hierzu wird die Glasbeschichtung auf eine der wenigsten einen elektrisch leitenden Heizschicht abgewandte Oberfläche der ersten elektrischen Isolationsschicht und/oder der zweiten elektrischen Isolationsschicht aufgebracht.

Vorteilhaft ist es, wenn auf die erste elektrische Isolationsschicht und/oder auf die zweite elektrische Isolationsschicht eine Beschichtung aus einem Fluorpolymer oder einem anorganische Polymere, insbesondere Polysiloxan oder Polyorganosiloxan, aufgebracht ist. Mit einer derartigen Beschichtung, die auf eine der wenigsten einen elektrisch leitenden Heizschicht abgewandte Oberfläche der ersten elektrischen Isolationsschicht und/oder der zweiten elektrischen Isolationsschicht aufgebracht ist, werden Anhaftungen der Kunststofffolie an der Heizleiste zumindest weitgehend verhindert.

Bei einer Ausgestaltung der Erfindung ist vorgesehen, dass zwischen der ersten elektrischen Isolationsschicht und der wenigstens einen elektrisch leitenden Heizschicht oder zwischen wenigstens zwei elektrisch leitenden Heizschichten oder zwischen der wenigstens einen elektrisch leitenden Heizschicht und der wenigstens einen zweiten elektrischen Isolationsschicht eine elektrisch leitende Anschlussschicht angeordnet ist.

Rein exemplarisch ist vorgesehen, dass die elektrisch leitende Anschlussschicht, die beispielsweise aus Silber/Platin/Palladium mit einer Beimischung von keramischen Bestandteilen hergestellt wird, einen spezifischen Widerstand von kleiner als 60 Nano Ohm*m (Ohmmeter) aufweist.

Die elektrisch leitende Anschlussschicht dient zur elektrischen Verbindung der elektrisch leitenden Heizschicht mit einem Anschlussbereich des Schweißwerkzeugs, an dem beispielsweise ein Anschlusskabel angeschlossen werden kann. Typischerweise ist an einander entgegengesetzten Endbereichen der elektrisch leitenden Heizschicht jeweils ein Anschlussbereich ausgebildet, der mittels der elektrisch leitenden Anschlussschicht mit der elektrisch leitenden Heizschicht verbunden ist. Dementsprechend erstreckt sich die elektrisch leitende Anschlussschicht nicht über die gesamte Oberfläche der Heizleiste, sondern lediglich über einen Bruchteil der Ausdehnung dieser Oberfläche.

Zweckmäßig ist es, wenn das Trägerteil einen Kühlkanal aufweist, der sich von einem ersten Kühlmittelanschluss an der Außenoberfläche des Trägerteils zu einem zweiten Kühlmittelanschluss an der Außenoberfläche des Trägerteils erstreckt und der zumindest bereichsweise als Nut in der Trägerfläche ausgebildet ist, wobei die Nut von einer umlaufenden Dichtung berandet ist, auf der die Heizleiste abdichtend aufliegt. Durch die bereichsweise Ausgestaltung des Kühlkanals als in Richtung der Heizleiste offene Nut wird eine besonders intensive thermische Wechselwirkung zwischen der Kühlflüssigkeit und der Heizleiste gewährleistet, da die Kühlflüssigkeit in unmittelbarem körperlichen Kontakt mit der Heizleiste kommt. Ferner weist die aus Aluminiumnitrid hergestellte erste elektrische Isolationsschicht eine hohe Wärmeleitfähigkeit auf, sodass eine schnelle Wärmeabfuhr von der Heizleiste in die Kühlflüssigkeit nach Beendigung des Schweißvorgangs gewährleistet werden kann. Um ein Austreten von Kühlflüssigkeit aus dem Kühlkanal im Bereich der offenen Nut zu vermeiden ist das Trägerteil mit einer umlaufenden Dichtung versehen, die ihrerseits zumindest bereichsweise in einer Dichtnut aufgenommen werden kann, die die offene Nut umrahmt. Ferner ist vorgesehen, dass die Heizleiste abseits der offenen Nut entweder stoffschlüssig mit der Trägerfläche verbunden ist oder durch geeignete Niederhalter auf die umlaufende Dichtung aufgepresst wird.

Alternativ ist vorgesehen, dass der Kühlkanal geschlossen ausgebildet ist und somit kein unmittelbarer Kontakt zwischen der Kühlflüssigkeit und der Heizleiste vorliegt. Das kann realisiert werden durch Bohrungen im Trägerteil durch die die Kühlflüssigkeit fließt oder wenn die Kühlkanal-Nut mit einem Deckel aus Messing oder Aluminium verschlossen wird. Hiermit kann erreicht werden, dass die Heizleiste vollflächig auf dem Trägerteil aufliegt und somit auch bei lokal wirkenden Kraftspitzen die Bruchgefahr für die Heizleiste auf einem niedrigen Niveau gehalten werden kann.

In weiterer Ausgestaltung der Erfindung ist vorgesehen, dass die erste elektrische Isolationsschicht als Planparallelplatte ausgebildet ist und/oder dass eine größte Oberfläche der Heizleiste größer als die Trägerfläche ist. Eine Ausgestaltung der ersten elektrischen Isolationsschicht als Planparallelplatte ist vorteilhaft, da Aluminiumnitrid schwierig zu bearbeiten ist und üblicherweise in Plattenform hergestellt wird. Sofern die größte Oberfläche der Heizleiste größer als die Trägerfläche ist, kann eine elektrische Kontaktierung der Heizleiste abseits der Schweißfläche der Heizleiste, die der Trägerfläche des Trägerteils abgewandt ist, vorgenommen werden. Hierdurch können bislang erforderliche elektrische Anschlusselemente, die über die Schweißfläche abragen und störend für den Schweißprozess sind, vermieden werden.

Bei einer vorteilhaften Weiterbildung der Erfindung ist vorgesehen, dass die wenigstens eine elektrisch leitende Heizschicht eine dem Trägerteil abgewandte ebene Oberfläche der ersten elektrischen Isolationsschicht bereichsweise bedeckt, um wenigstens eine lokale Erhebung auszubilden. Aufgrund der hohen Wärmeleitfähigkeit der ersten elektrischen Isolationsschicht verteilt sich die von der elektrisch leitenden Heizschicht bereitgestellte Wärme homogen über die gesamte Oberfläche der ersten elektrischen Isolationsschicht. Um spezifischen Anforderungen im Hinblick auf die geometrische Gestaltung der Schweißnaht, die mit dem Schweißwerkzeug hergestellt werden soll, erfüllen zu können, kann daher vorgesehen werden, dass die elektrisch leitende Heizschicht die erste elektrische Isolationsschicht nur teilweise überdeckt, um dadurch eine schmalere Schweißzone zu verwirklichen. Vorzugsweise ist vorgesehen, dass durch den Schichtaufbau der Heizleiste und unter Berücksichtigung der Deformationseigenschaften der zu verschweißenden Kunststofffolien bei der Durchführung des Schweißvorgangs gewährleistet werden kann, dass nur die erhaben von der ersten elektrischen Isolationsschicht abragenden Bereiche der elektrisch leitenden Heizschicht mit der darauf aufgebrachten zweiten elektrischen Isolationsschicht in mechanischem Kontakt mit der Kunststofffolien kommen. Ferner ist dabei vorgesehen, dass kein mechanischer Kontakt derjenigen Bereiche der ersten elektrischen Isolationsschicht mit der Kunststofffolie stattfindet, die nicht von der elektrisch leitenden Heizschicht bedeckt sind.

Bevorzugt ist vorgesehen, dass die erste elektrische Isolationsschicht an einer dem Trägerteil abgewandten Oberfläche reliefartig strukturiert ist. Eine solche Strukturierung der Oberfläche der ersten elektrischen Isolationsschicht kann beispielsweise durch eine Herstellung der ersten elektrischen Isolationsschicht aus mehreren aufeinander geschichteten und geometrisch unterschiedlich strukturierten Plattenabschnitten oder durch eine spanende Bearbeitung, insbesondere durch lokale Fräsbearbeitung, verwirklicht werden. Auf eine Unterseite der ersten elektrischen Isolationsschicht, die vorzugsweise eben ausgebildet ist, können dann die elektrisch leitende Heizschicht oder auch mehrere elektrisch leitenden Heizschichten nur bereichsweise überdeckend oder vollständig überdeckend aufgetragen werden und anschließend die wenigstens eine, zweite elektrische Isolationsschicht aufgebracht werden. Bei einer Verwendung einer solchen Heizleiste ist vorgesehen, dass die strukturierte Oberfläche der ersten elektrischen Isolationsschicht für einen Kontakt mit der zu verschweißenden Folie genutzt wird und die Unterseite der ersten elektrischen Isolationsschicht dem Trägerteil zugewandt ist.

Vorteilhaft ist es, wenn zwischen zwei elektrisch leitenden Heizschichten eine, insbesondere aus Aluminiumnitrid hergestellte, dritte elektrische Isolationsschicht angeordnet ist, die mit den angrenzenden elektrischen Heizschichten einen Kondensator bildet. Mit einem solchen in die elektrische Heizschicht integrierten elektrischen Kondensator können beispielsweise Zonen mit unterschiedlicher Wärmeentwicklung in der Heizleiste verwirklicht werden, da es bei einem Aufladen oder einem Entladen dieses Kondensators zu lokalen unterschiedlichen Stromverteilungen in der Heizleiste kommt.

Alternativ kann vorgesehen sein, dass die elektrische Anschlussschicht auf der einen Seite der ersten Isolationsschicht und die elektrische Heizschicht auf der anderen Seite der ersten Isolationsschicht so angeordnet sind, dass die Schichten einen Kondensator bilden. Der Kondensator lässt den Wechselstrom, mit dem die Heizschicht betrieben wird, durch die erste Isolationsschicht passieren. Auf diese Weise kann sich die Heizschicht auf der der zu verschweißenden Folie zugewandten Seite der Heizleiste befinden und der elektrische Kontakt kann sich auf der der zu verschweißenden Folie abgewandten Seite befinden. So wird eine Berührung der elektrischen Kontakte durch die Folie vermieden.

In weiterer Ausgestaltung der Erfindung ist vorgesehen, dass die erste Isolationsschicht mit einer elektrisch leitenden Durchkontaktierung versehen ist, um die wenigstens eine elektrisch leitende Heizschicht zu kontaktieren. Mit einer solchen Durchkontaktierung wird eine räumliche Verlagerung der bislang von der Schweißebene des Schweißwerkzeugs abragenden und daher störenden elektrischen Kontaktierung in einen Raumbereich abseits der Schweißebene ermöglicht, bei dem der elektrische Anschluss für die elektrisch leitende Heizschicht keine Störeinfluss auf die Schweißebene und die Schweißbearbeitung hat. Hierzu ist es vorteilhaft, wenn die Oberfläche der Heizleiste größer als die Trägerfläche des Trägerteils ist. Bevorzugt ist vorgesehen, dass eine längste Kante der Heizleiste eine größere räumliche Ausdehnung als eine längste Kante des Trägerteils hat, wobei davon ausgegangen wird, dass die längste Kante der Heizleiste parallel zur längsten Kante des Trägerteils ausgerichtet ist. Die Durchkontaktierung kann für eine unmittelbare Verbindung zwischen einem elektrischen Verbindungskabel und der elektrisch leitenden Heizschicht ausgebildet sein, ohne dass hierfür eine elektrisch leitende Anschlussschicht erforderlich ist. Alternativ kann die Durchkontaktierung mit einer elektrisch leitenden Anschlussschicht verbunden sein, die ihrerseits elektrisch mit der elektrisch leitenden Heizschicht verbunden ist.

Vorteilhafte Ausführungsformen der Erfindung sind in der Zeichnung dargestellt. Hierbei zeigt:
- Figur 1: eine rein schematische Schnittdarstellung eines Schweißwerkzeugs mit einem Trägerteil und einer Heizleiste,
- Figur 2: einen Anschlussbereich des Schweißwerkzeugs gemäß der Figur 1 mit einem Schichtaufbau der Heizleiste, einer Durchkontaktierung und einem elektrischen Anschlusskabel,
- Figur 3: eine rein schematische perspektivische Darstellung einer zweiten Ausführungsform eines Schweißwerkzeugs mit einer reliefartigen Oberfläche, und.
- Figur 4: eine rein schematische perspektivische Darstellung einer Heizleiste, auf der ein Schweißbereich und ein Trennbereich ausgebildet sind.

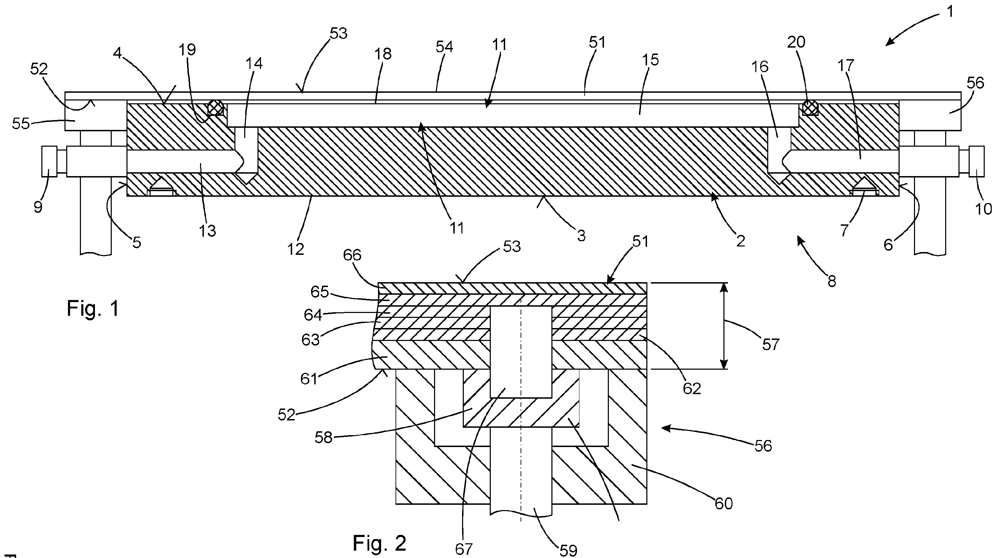

Ein in der Figur 1 in einer streng schematischen Schnittdarstellung gezeigtes Schweißwerkzeug 1 ist zur Verwendung in einer nicht dargestellten Schweißanlage vorgesehen und wird zur Verschweißung von Kunststoffmaterial im, insbesondere von Kunststofffolien, eingesetzt.

Das Schweißwerkzeug 1 umfasst ein beispielsweise aus Aluminium oder Edelstahl oder Messing oder Kunststoff hergestelltes Trägerteil 2, das insbesondere als quaderförmig profilierte Leiste ausgebildet sein kann. Rein exemplarisch weist das Trägerteil eine eben ausgebildete Unterseite 3, eine der Unterseite 3 abgewandte, eben ausgebildete Oberseite 4, eine Linke Seitenfläche 5 und eine rechts Seitenfläche 6 auf. Ferner weist das Trägerteil 2 eine nicht sichtbare, parallel zur Darstellungsebene der Figur 1 ausgerichtete Rückseite und eine dem Betrachter der Figur 1 zugewandte, aufgrund der steht Darstellung ebenfalls nicht sichtbare Vorderseite auf.

Ausgehend von der Unterseite 3 erstrecken sich in Richtung der Oberseite 4 rein exemplarisch zwei Gewindebohrungen 7, die zusammen mit der Unterseite 3 eine mechanische Schnittstelle 8 für die Festlegung des Trägerteils 2 an der Schweißanlage bilden. An der linken Seitenfläche 5 und der rechten Seitenfläche 6 sind ein erster Fluidanschluss 9 und ein zweiter Fluidanschluss 10 ausgebildet, die jeweils rein exemplarisch als Schlauchkupplungen zur Ankopplung nicht dargestellter Fluidschläuche vorgesehen sind und durch die ein Kühlfluid, insbesondere Kühlwasser, an das Schweißwerkzeug 1 bereitgestellt bzw. vom Schweißwerkzeug 1 abgeführt werden kann.

Zwischen dem ersten Fluidanschluss 9 und den zweiten Fluidanschluss 10, deren Abstand auch eine längste Kante 12 des Trägerteils 2 bestimmt, erstreckt sich ein Kühlkanal 11 durch das Trägerteil 2, der rein exemplarisch durch eine parallel zur längsten Kante 12 ausgerichtete erste Längsbohrung 13, eine quer zur längsten Kante 12 ausgerichtete erste Querbohrung 14, eine Nut 15, eine zweite Querbohrung 16 sowie eine zweite Längsbohrung 17 gebildet wird. Beispielhaft ist vorgesehen, dass die beiden Längsbohrungen 13, 17 jeweils ausgehend von der linken Seitenfläche 5 bzw. der rechten Seitenfläche 6 in das Trägerteil eingebracht sind. Die Nut 15 kann beispielsweise durch einen Fräsvorgang ausgehend von der Oberseite 4 in das Trägerteil 2 eingebracht werden. Auch die Querbohrungen 14 und 16 können ausgehend von der Oberseite 4 in das Trägerteil 2 eingebracht werden.

Eine Mündungsöffnung 18 der Nut 15 wird von einer Dichtnut 19 umrahmt, in der rein exemplarisch eine umlaufende, ringförmige Dichtung 20 eingelegt ist. Die Dichtnut 19 und die Dichtung 20 sind derart aufeinander abgestimmt, dass die Dichtung 20 vor einer Montage der Heizleiste 51 auf das Trägerteil 2 über die Oberseite 4 des Trägerteils 2 abragt. Die Dichtung 20 ist vorzugsweise aus einem gummielastischen Material hergestellt, dessen Elastizitätseigenschaften derart gewählt sind, dass die Dichtung 20 nach der Montage der Heizleiste 51 abdichtend an einer Unterseite 52 der Heizleiste 51 anliegt und somit im Zusammenspiel mit der Heizleiste 51 und dem Trägerteil 2 einen geschlossenen Kühlkanal 11 begrenzt, in den lediglich über den ersten Fluidanschluss 9 oder den zweiten Fluidanschluss 10 eine Fluidzufuhr bzw. Fluidabfuhr möglich ist.

Die Heizleiste 51 weist in einer quer zur Darstellungsebene der Figur 1 ausgerichteten Raumrichtung rein exemplarisch die gleiche Erstreckung wie das Trägerteil 2 auf. Hingegen erstreckt sich die Heizleiste in einer Raumrichtung, die parallel zur längsten Kante 12 des Trägerteils 2 ausgerichtet ist, beidseitig über das Trägerteil 2 hinaus. Aufgrund des nachstehend näher beschriebenen Schichtaufbaus der Heizleiste 51 ist eine elektrische Kontaktierung der Heizleiste an der Unterseite 52 möglich, sodass eine der Unterseite 52 abgewandte Oberseite der Heizleiste 51, die auch als Schweißfläche bezeichnet werden kann, frei von Störkonturen ist. Dies ist insbesondere bei einer Verwendung des Schweißwerkzeug 1 für Schweißvorgänge, bei denen das Kunststoffmaterial, insbesondere die Kunststofffolien, in Richtung der längsten Achsen 12, 54 gefördert werden, von Vorteil. Beispielhaft ist vorgesehen, dass die längste Kante 54 eine Ausdehnung von 0,05 m bis 1 m aufweist und eine Dicke 57 der Heizleiste 51 in einem Bereich von 2 mm bis 10 mm angesiedelt ist.

Wie der streng schematischen Darstellung der Figur 2 entnommen werden kann, die eine Schnittdarstellung des zweiten Anschlussbereichs 56 zeigt sowie eines Bereichs der Heizleiste 51 zeigt, weist die Heizleiste 51 einen in der Figur 2 nicht maßstäblich dargestellten Schichtaufbau auf. Beispielhaft umfasst der Schichtaufbau eine erste Isolationsschicht 61, eine erste elektrisch leitende Heizschicht 62, eine zweite elektrisch leitende Heizschicht 63, eine dritte elektrisch leitende Heizschicht 64, eine zweite Isolationsschicht 65 sowie eine Anti-Haft-Schicht 66. Rein exemplarisch ist vorgesehen, dass alle vorgenannten Schichten des Schichtaufbaus jeweils mit Ausnahme der erste Isolationsschicht 61 die gleiche Schichtdicke aufweisen, was in der Praxis nicht notwendigerweise verwirklicht wird. Auch die Anzahl der elektrisch leitenden Heizschichten 62, 63, 64, die Anzahl der zweiten Isolationsschicht 65 und der Anti-Haft-Schicht 66 können in der Praxis abweichend gewählt werden.

Die Heizleiste 51 ist gemäß der Darstellung der Figur 1 vollständig separat vom Trägerteil 2 ausgebildet und kann unabhängig vom Trägerteil 2 hergestellt werden. Die Heizleiste 51 wird in nicht dargestellter Weise mit ihrer Unterseite 52 auf der Oberseite 4 des Trägerteils 2 festgelegt, beispielsweise durch eine Verklebung. Alternativ kann vorgesehen sein, dass nicht dargestellte mechanische Befestigungsmittel eingesetzt werden, um die Heizleiste 51 am Trägerteil 2 festzulegen.

Für eine Herstellung der Heizleiste 51 kann vorgesehen sein, dass zunächst die aus Aluminiumnitrid gebildete erste Isolationsschicht 61 aus einem plattenförmigen Rohmaterial ausgeschnitten wird, dies kann beispielsweise durch Laserschneiden, Wasserstrahlschneiden oder einen spanabhebenden Schneidvorgang vorgenommen werden.

In einem nachfolgenden Bearbeitungsschritt wird ausgehend von der Unterseite 52 der Heizleiste 51 eine rein exemplarisch kreiszylindrische Bohrung in die Heizleiste 51 eingebracht. In diese kreiszylindrische Bohrung wird ein elektrisch leitender Anschlussstift 67 eingesetzt, der beispielsweise mittels eines elektrisch leitenden Klebers in der Bohrung festgelegt werden kann.

Anschließend werden die Schichten 62 bis 65 beispielsweise in einem Siebdruckverfahren jeweils einzeln aufgetragen und ausgehärtet. Die Anti-Haft-Schicht 66 wird im Zuge eines Sprühauftrags auf die zweite Isolationsschicht 65 aufgetragen und anschließend ausgehärtet.

Der Anschlussstift 67 bildet somit eine Durchkontaktierung, mit der eine Zufuhr von elektrischer Energie an die elektrisch leitenden Heizschichten 62 bis 64 durch die erste Isolationsschicht 61 verwirklicht werden kann. Alternativ kann die Durchkontaktierung auch durch Auffüllen der Bohrung mit einer elektrisch leitenden, gestaltlosen Masse, erstellt werden, die anschließend ausgehärtet wird.

Beispielhaft ist vorgesehen, dass der Anschlussstift 67 nach unten über die Unterseite 52 abragt und mit einem Anschlusselement 58 elektrisch leitend verbunden ist. Beispielhaft ist das Anschlusselement 58 kreiszylindrisch ausgebildet und stellt damit eine flächige Kontaktierung des Anschlussstifts 67 sicher. Das Anschlusselement 58 ist mit einem Anschlusskabel 59 versehen, das eine Isolierhülse 60 durchsetzt, die an der Unterseite 52 der Heizleiste 51 angebracht ist.

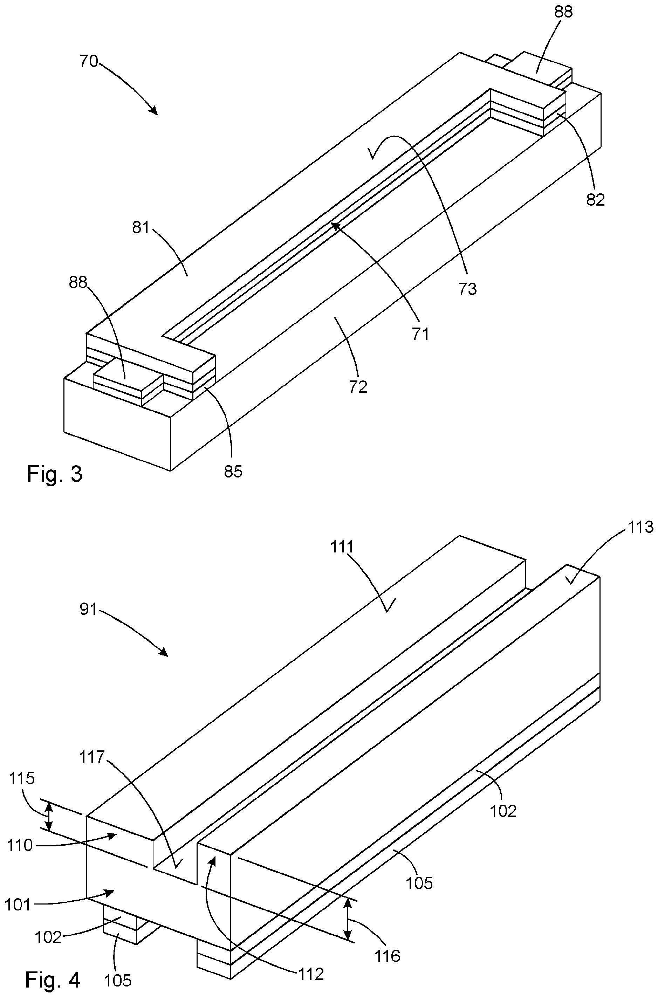

Die in der Figur 3 nur schematisch dargestellte zweite Ausführungsform eines Schweißwerkzeugs 70 umfasst ein Trägerteil 72 sowie eine auf dem Trägerteil 72 aufliegende Heizleiste 71. Die Heizleiste 71 weist einen Schichtaufbau auf, bei dem eine Oberseite 73 einer aus Aluminiumnitrid hergestellten ersten Isolationsschicht 81 für einen mechanischen Kontakt und eine Wärmeübertragung mit einer nicht dargestellten Folie ausgebildet ist. Rein exemplarisch ist die erste Isolationsschicht 81 U-förmig gestaltet, um eine nicht dargestellte Konturschweißnaht herstellten zu können. Eine Unterseite der ersten Isolationsschicht 81 ist mit einer elektrisch leitenden Heizschicht 82 und einer zweiten Isolationsschicht 85 versehen, wobei die zweite Isolationsschicht 85 auf dem elektrisch leitenden Trägerteil 72 aufliegt.

Für eine elektrische Kontaktierung der elektrisch leitenden Heizschicht 82 sind beidseitig seitlich über die erste elektrische Isolationsschicht 81 abragende, jeweils in der Art einer Leiterbahn ausgebildete elektrisch leitende Anschlussbereiche 88 vorgesehen, die in nicht näher dargestellter Weise mit einem elektrischen Anschlusselement verbunden werden kann, um einen Stromfluss durch die elektrisch leitende Heizschicht 82 bewirken zu können.

Die in der Figur 4 gezeigte Heizleiste 91 weist eine aus Aluminiumnitrid hergestellten, leistenförmig ausgebildeten Profilkörper auf, der die erste Isolationsschicht 101 bildet. Die erste Isolationsschicht 101 weist einen Schweißbereich 110 auf, der rein exemplarisch eine rechteckig ausgebildete Schweißfläche 111 bestimmt. Benachbart zum Schweißbereich 110 ist ein Trennbereich 112 ausgebildet, der rein exemplarisch eine rechteckige Trennfläche 113 aufweist. Wie der schematischen Darstellung der Figur 4 entnommen werden kann, ist der Trennbereich 112 mit einem größeren Abstand 116 von einer Grundfläche 117 der ersten Isolationsschicht 101 entfernt der Schweißbereich 110, der einen geringeren Abstand 115 zur Grundfläche 117 aufweist. Beispielhaft ist vorgesehen, dass sowohl unterhalb des Schweißbereichs 110 als auch unterhalb des Trennbereichs 112 jeweils eine Heizleiste 71 angeordnet ist. Die beiden rein exemplarisch identisch aufgebauten Heizleisten 71 werden jeweils von einer elektrisch leitenden Heizschicht 102 und einer darunter liegenden zweiten Isolationsschicht 105 gebildet. Somit kann in Kombination mit der geometrischen Ausgestaltung des Trennbereichs 112 ein kombinierter Schweiß- und Trennvorgang mit der Heizleiste 91 durchgeführt werden, bei dem nicht dargestellte Kunststofffolienbahnen mit dem Schweißbereich 110 verschweißt und mit dem benachbart angeordneten Trennbereich 112 in einzelne Abschnitte getrennt werden können.

## Patentansprüche

1. Schweißwerkzeug (1; 70) zur Verschweißung von Kunststofffolien, mit einem Trägerteil (2; 72), das eine mechanische Schnittstelle (8) zur Ankopplung an eine Schweißeinrichtung sowie eine Trägerfläche (4) aufweist, auf der eine Heizleiste (51; 71; 91) angeordnet ist, die einen Schichtaufbau mit jeweils wenigstens einer Schicht aus der Gruppe: erste elektrische Isolationsschicht (61: 81; 101), elektrisch leitende Heizschicht (62; 82; 102), zweite elektrische Isolationsschicht (65; 85; 105), aufweist, wobei die erste elektrische Isolationsschicht (61: 81; 101) aus Aluminiumnitrid hergestellt ist.

2. Schweißwerkzeug (1; 70) nach Anspruch 1, **dadurch gekennzeichnet, dass** die erste elektrische Isolationsschicht (61: 81; 101) eine Dicke in einem Intervall zwischen 0,5mm bis 10mm, vorzugweise in einem Intervall zwischen 1mm und 5mm, aufweist.

3. Schweißwerkzeug (1; 70) nach Anspruch 1 oder 2, **dadurch gekennzeichnet, dass** die erste elektrische Isolationsschicht (61: 81; 101) zumindest bereichsweise von wenigstens einer elektrisch leitenden Heizschicht (62; 82; 102), vorzugsweise zumindest bereichsweise von wenigstens zwei elektrisch leitenden Heizschichten (62; 82; 102), insbesondere zumindest bereichsweise von wenigstens drei elektrisch leitenden Heizschichten (62; 82; 102), bedeckt ist, wobei die jeweilige elektrisch leitende Heizschicht (62; 82; 102) aus einem elektrisch leitenden Keramikmaterial hergestellt ist.

4. Schweißwerkzeug (1; 70) nach Anspruch 1, 2 oder 3, **dadurch gekennzeichnet, dass** auf die wenigstens eine elektrisch leitende Heizschicht (62; 82; 102) wenigstens eine zweite elektrische Isolationsschicht (65; 85; 105) aufgebracht ist, die aus einem elektrisch isolierenden Keramikmaterial hergestellt ist.

5. Schweißwerkzeug (1; 70) nach einem der Ansprüche 1 bis 4, **dadurch gekennzeichnet, dass** auf die erste elektrische Isolationsschicht (61: 81; 101) und/oder auf die zweite elektrische Isolationsschicht (65; 85; 105) eine Glasbeschichtung aufgebracht ist

6. Schweißwerkzeug (1; 70) nach einem der Ansprüche 1 bis 4, **dadurch gekennzeichnet, dass** auf die erste elektrische Isolationsschicht (61: 81; 101) und/oder auf die zweite elektrische Isolationsschicht (65; 85; 105) eine Beschichtung aus einem Fluorpolymer oder einem anorganische Polymer, insbesondere Polysiloxan oder Polyorganosiloxan, aufgebracht ist.

7. Schweißwerkzeug (1; 70) nach Anspruch 4, 5 oder 6, **dadurch gekennzeichnet, dass** zwischen der ersten elektrischen Isolationsschicht (61: 81; 101) und der wenigstens einen elektrisch leitenden Heizschicht (62; 82; 102) oder zwischen wenigstens zwei elektrisch leitenden Heizschichten (62; 82; 102) oder zwischen der wenigstens einen elektrisch leitenden Heizschicht (62; 82; 102) und der wenigstens einen zweiten elektrischen Isolationsschicht (65; 85; 105) eine elektrisch leitende Anschlussschicht (88) angeordnet ist.

8. Schweißwerkzeug (1; 70) nach einem der vorhergehenden Ansprüche, **dadurch gekennzeichnet, dass** das Trägerteil (2; 72) einen Kühlkanal (11) aufweist, der sich von einem ersten Kühlmittelanschluss (9) an der Außenoberfläche (5) des Trägerteils (2; 72) zu einem zweiten Kühlmittelanschluss (10) an der Außenoberfläche (6) des Trägerteils (2; 72) erstreckt und der zumindest bereichsweise als Nut (15) in der Trägerfläche (4) ausgebildet ist, wobei die Nut (15) von einer umlaufenden Dichtung (19) berandet ist, auf der die Heizleiste (51; 71; 91) abdichtend aufliegt.

9. Schweißwerkzeug (1; 70) nach einem der vorhergehenden Ansprüche, **dadurch gekennzeichnet, dass** die erste elektrische Isolationsschicht (61: 81; 101) als Planparallelplatte ausgebildet ist und/oder dass eine größte Oberfläche der Heizleiste (51; 71; 91) größer als die Trägerfläche (4) ist.

10. Schweißwerkzeug (1; 70) nach einem der vorhergehenden Ansprüche, **dadurch gekennzeichnet, dass** die wenigstens eine elektrisch leitende Heizschicht (62; 82; 102) eine dem Trägerteil (2; 72) abgewandte ebene Oberfläche der ersten elektrischen Isolationsschicht (61: 81; 101) bereichsweise bedeckt, um wenigstens eine lokale Erhebung auszubilden.

11. Schweißwerkzeug (1; 70) nach einem der Ansprüche 1 bis 8, **dadurch gekennzeichnet, dass** die erste elektrische Isolationsschicht (61; 81; 101) an einer dem Trägerteil (2; 72) abgewandten Oberfläche reliefartig strukturiert ist.

12. Schweißwerkzeug (1; 70) nach einem der vorhergehenden Ansprüche, **dadurch gekennzeichnet, dass** zwischen zwei elektrisch leitenden Heizschichten (62; 82; 102) eine, insbesondere aus Aluminiumnitrid hergestellte, dritte elektrische Isolationsschicht angeordnet ist, die mit den angrenzenden elektrischen Heizschichten (62; 82; 102) einen Kondensator bildet.

13. Schweißwerkzeug (1; 70) nach einem der vorhergehenden Ansprüche, **dadurch gekennzeichnet, dass** die erste Isolationsschicht (61: 81; 101) mit einer elektrisch leitenden Durchkontaktierung (67) versehen ist, um die wenigstens eine elektrisch leitende Heizschicht (62; 82; 102) zu kontaktieren.
